# EUROPEAN PATENT APPLICATION

(11) **EP 1 362 799 A1**
(43) Date of publication of application: **19.11.2003**
(21) Application number: 03076461.7
(22) Date of filing: 15.05.2003
(51) Int. Cl.: B65D 79/00, B65D 77/20, A23C 9/154, B65D 85/80

(54) **Single portion container for a liquid to be foamed**

(30) Priority: 15.05.2002 NL 1020604
(71) Applicant: Campina B.V., 5301 LB Zaltbommel (NL)
(72) Inventor: Kok, Johannes Arnoldus, 5555 KZ Valkenswaard (NL)
(74) Representative: Brookhuis, Hendrik Jan Arnold

(57) **Abstract**

The invention relates to a container (1), intended for single use, having a chamber (2) for a single portion of liquid (3) suitable for human consumption, the chamber being partly filled with the liquid and comprising a free space (5) above the liquid surface (4), and a closure means (6) which closes off the chamber, characterized in that the liquid has foam-forming properties which are such that as a result of the container being shaken by hand at least 20%, preferably at least 40%, of the liquid is converted into foam, and in that the free space in the chamber is large enough to hold the foam which is formed as a result of the container being shaken by hand.

## Description

The invention relates to a container, intended for single use, having a chamber for a single portion of liquid suitable for human consumption, the chamber being partly filled with the liquid and comprising a free space above the liquid surface, and a closure means which closes off the chamber.

A container of this type is known, for example, from EP 0 299 571. This known container is used in particular in the catering industry to provide a portion of milk or cream, in particular for use in coffee. The volume of the container is matched to the required quantity of milk or cream for one cup of coffee. After the container has been emptied by the consumer, the container is thrown away.

For economic reasons, containers of the type described in EP 0 299 571 are generally filled in such a way that a small free space is present above the surface of the liquid.

EP 0 713 669 describes a milk foamer of a known type. The milk foamer comprises a vessel into which one or a few portions of milk which is to be foamed can be poured. The vessel is then closed off by means of a lid with an opening formed in the centre. A rod fits through this opening. A perforated plunger element is arranged at the end of the rod which is located inside the vessel, and a button is arranged at the upper end located outside the vessel.

For use, the vessel is partly filled with milk. Then, the lid including the rod with plunger element and button is placed onto the vessel. The milk can be foamed as a result of the button being taken hold of and moved quickly up and down a few times in succession in such a manner that the plunger moves through the milk, so that foamed milk, for example for use in cappuccino, is produced.

If it is desired, for example in the catering industry, to serve a portion of foamed milk, such as for example the foamed milk associated with the popular beverage cappuccino, it is necessary to perform a number of operations which have to be repeated for each new order. The foamed liquid must in each case be prepared just before it is served, for example using a milk foamer of the type described in EP 0 713 669 or using a special foaming device of an espresso machine, which is relatively expensive to purchase. Known milk foamers of the type described in EP 0 713 669 have the drawbacks of being difficult to clean, of the foaming of the milk requiring a relatively large amount of effort and of their durability often being limited.

If it is desired for the user to add the desired quantity of foamed liquid, the foamed liquid has to be served separately. This requires additional crockery to be provided and leads to additional washing-up.

It is an object of the present invention to make it possible to produce a single portion of foamed liquid in a simple way.

The invention achieves this object by means of a container, intended for single use, having a chamber for a single portion of liquid suitable for human consumption, in which the chamber is partially filled with the liquid and comprises a free space above the liquid surface, and a closure means which closes off the chamber. The container is characterized in that the liquid has foam-forming properties which are such that as a result of the container being shaken at least 20%, preferably at least 40%, of the liquid is converted into foam, and in that the free space in the chamber is large enough to hold the foam which is formed as a result of the container being shaken by hand.

The chamber of the container is partially filled with a liquid which has foam-forming properties which are such that, as a result of the liquid being shaken by hand for 15 seconds, for example, at least 20% of the liquid is converted into foam. The filling preferably takes place under aseptic conditions. With some plastic containers (for example made from PP or PE), it is also possible to use post-sterilization.

Before the liquid is foamed, there is free space above the liquid surface. This free space is large enough to hold the foam which is formed by the shaking action.

The chamber is closed off by a closure means. This closure means is preferably a breakable or removable metal foil provided with a layer of plastic at least on the inner side of the container. It is also possible to use closure means which consist entirely of plastic laminate, for example of PET/PE or PET/PP.

To optimize the foam formation, it is possible to increase the swirling in the liquid by means of a separate foam-generating member arranged in the container.

To simplify removal of the contents from the container and to limit damage to the foam in the process, in a particular embodiment the container is provided with a wall which is completely or partially in concertina form and which can easily be compressed by hand. A container of this type is preferably provided with a wide outlet opening.

An exemplary embodiment of a container according to the invention will be explained in more detail below with reference to the appended drawing, in which:
Figure 1 shows a cross section through an exemplary embodiment of the container according to the invention before the liquid is foamed by being shaken.
Figure 2 shows a cross section through an exemplary embodiment of the container according to the invention after the liquid has been foamed by being shaken.
Figure 3 shows a cross section through an exemplary embodiment of the container according to the invention before the liquid has been foamed by being shaken, with a foam-generating member arranged in the container.
Figure 4 shows a particular embodiment in which the container is provided with a wall which is partially in the form of a concertina.

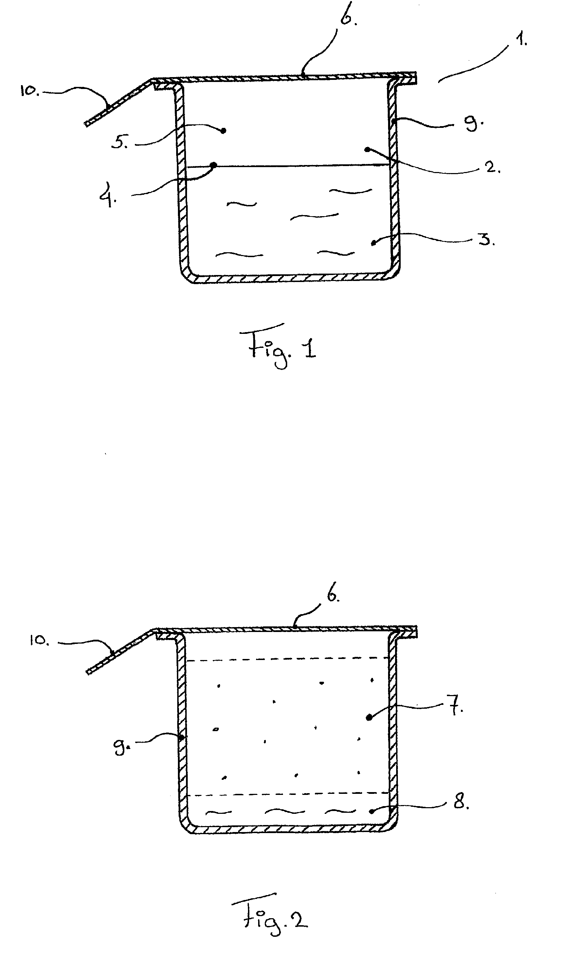

Figure 1 shows a container 1 according to the invention with a vessel 9 which comprises a chamber 2 which is partly filled with a liquid 3 suitable for human consumption, for example a dairy product which can be foamed to form cappuccino foam. The chamber 2 has a volume which, for example, corresponds to the volume of a standard 13-gram tub made from plastic laminate or a thin metal and, by way of example, contains 7 grams of a liquid suitable for human consumption.

Before the liquid 3 is foamed, there is a free space 5 above the liquid surface 4. This free space 5 is large enough to hold the foam which is formed as a result of the container being shaken and, for example, takes about half of the total volume of the chamber 2.

At the top, the chamber 2 is closed off by a closure means 6. This closure means 6 preferably forms a breakable or removable wall of the chamber, preferably the top wall, for example a metal foil provided with a layer of plastic at least on the inner side of the container or a breakable or removable closure means consisting of plastic laminate, for example of PET/PE or PET/PP.

The container 1 is supplied to the user, by way of example, at the same time as a cup of coffee. If the user decides that he wants to have a layer of cappuccino foam on top of his coffee, he takes the container 1 in his hand and shakes it gently, i.e. for a short time (less than 30 seconds, for example 15 seconds) and at a limited speed of movement and/or with a limited movement amplitude.

The composition of the liquid 3 in the container 1 is such that even this limited shaking movement causes foam 7 to form. A proportion 8 of the liquid 3 is not converted into foam. After he has shaken the container, the user opens the container by puncturing closure means 6 or completely or partially removing closure means 6 with the aid of the pull tab 10. He can then pour out the foam 7, carried by the remaining proportion 8 of the liquid, and add it to the coffee in the amount desired. The used container can then be disposed of as waste.

If the container is used to foam a dairy product to form cappuccino foam, tests have shown that a dairy product which comprises 80-95 per cent by weight, preferably 88-92 per cent by weight, most preferably 90 per cent by weight, of skimmed milk, 5-15 per cent by weight, preferably 8-12 per cent by weight, most preferably 10 per cent by weight, of cream with a fat content of 30-45 per cent by weight, and 0.10-2.5 per cent by weight, preferably 0.15-0.5 per cent by weight, of stabilizer is very suitable for the purpose. In particular, the stabilizer is selected from the group consisting of alginate, carrageenan or a combination thereof. It has been found that including 0.15 per cent by weight of alginate and 0.02 per cent by weight of carrageenan provides a product with excellent foaming properties and which is optimally suitable to be held in the container according to the invention.

In addition to the above type of dairy product, it is also possible to use condensed milk substitutes based on vegetable fat, emulsifiers and proteins.

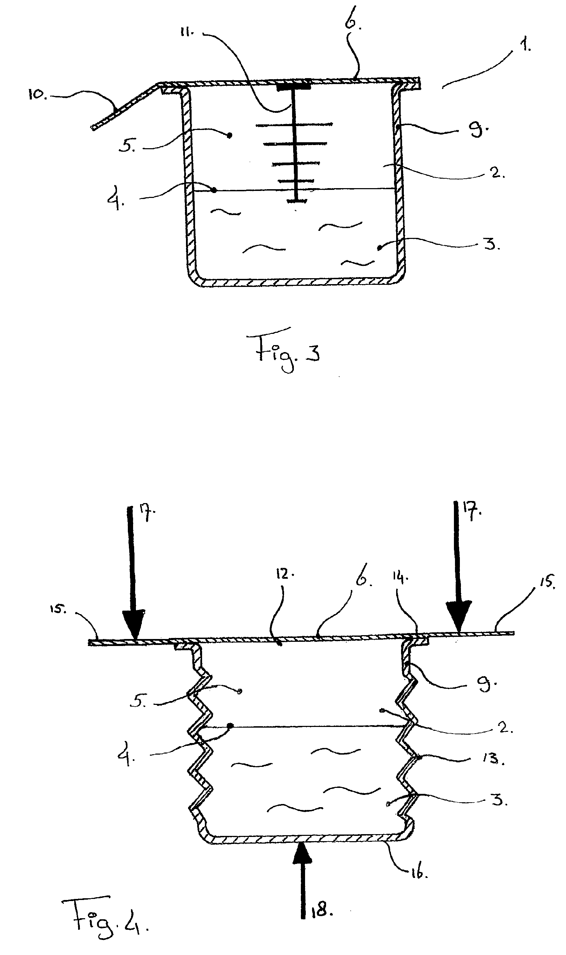

Figure 3 shows an exemplary embodiment of the container according to the invention in which there is a foam-generating member 11. This foam-generating member comprises, for example, an element which is made from thermoplastic by injection moulding. This element is, for example, attached to the closure means, for example in such a way that it is removed at the same time as the closure means, so that it does not prevent the foam from flowing out.

Figure 4 shows a particular embodiment in which the container is provided with a wall which is partially in concertina form. A container of this type is preferably provided with a wide outlet opening 12. In an embodiment of this type, the foam can be removed from the container in a simple way and without using additional tools, while damage to the foam is limited or even prevented. It is easy for the foam to be forced out of the container by the concertina-like part 13 of the wall being compressed.

The rim 14 at the top of the container is preferably provided with two retaining lips 15. To compress the concertina-like part 13 of the wall of the container, one finger is placed on each of the retaining lips (arrows 17 in Fig. 4). By using another finger or a thumb to press against the underside 16 of the container (arrow 18 in Fig. 4), the concertina-like part 13 of the wall of the container is compressed and the foam is forced out of the container.

In an embodiment which is not shown, the rim 14 as a whole is designed to be sufficiently wide for it to be possible for the fingers simply to be placed onto this rim while the foam is being forced out. In that case, there is no need for separate retaining lips.

## Claims

1. Container which can be held in the hand and is intended for single use, having a chamber for a single portion of liquid suitable for human consumption, the chamber being partly filled with the liquid and comprising a free space above the liquid surface, and a closure means which closes off the chamber, **characterized in that** the liquid has foam-forming properties which are such that as a result of the container being shaken by hand at least 20%, preferably at least 40%, of the liquid is converted into foam, and **in that** the free space in the chamber is large enough to hold the foam which is formed as a result of the container being shaken by hand.

2. Container according to claim 2, **characterized in that** the container comprises a foam-generating member.

3. Container according to at least one of the preceding claims, **characterized in that** the volume of the free space before any foam has been formed is approximately the same size as the volume taken up by the liquid in the same situation.

4. Container according to at least one of the preceding claims, **characterized in that** the container is filled under aseptic conditions.

5. Container according to at least one of the preceding claims, **characterized in that** the closure means forms a breakable or removable wall of the chamber, preferably the top wall, for example a metal foil which is provided with a layer of plastic at least on the inner side of the container.

6. Container according to at least one of the preceding claims, **characterized in that** the closure means is made entirely from plastic laminate.

7. Container according to at least one of the preceding claims, **characterized in that** the walls of the container at least in part are of concertina-like design.

8. Container according to at least one of the preceding claims, **characterized in that** the volume of the chamber is between 5 and 50 ml.

9. Container according to at least one of the preceding claims which contains a dairy product.

10. Container according to claim 6, **characterized in that** the dairy product comprises 80-95 per cent by weight, preferably 88-92 per cent by weight, of skimmed milk, 5-15 per cent by weight, preferably 8-12 per cent by weight, of cream with a fat content of 30-45 per cent by weight, and 0.10-2.5 per cent by weight, preferably 0.15-0.5 per cent by weight, of stabilizer.

11. Container according to claim 7, **characterized in that** the stabilizer is selected from the group consisting of alginate, carrageenan or a combination thereof.
